# EUROPEAN PATENT APPLICATION

(11) **EP 3 291 566 A1**
(43) Date of publication of application: **07.03.2018**
(21) Application number: 16186450.9
(22) Date of filing: 30.08.2016
(51) Int. Cl.: H04N 21/43, H04N 21/431, H04N 13/04

(54) **A DEVICE, METHOD AND SYSTEM FOR PROVIDING A MENU WITH MULTIPLE INSTANTIATIONS FOR A MULTI-STREAM DISPLAY**

(71) Applicant: Advanced Digital Broadcast S.A., 1292 Chambesy (CH)
(72) Inventor: Cichonski, Dariusz, 65-119 Zielona Gora (PL)
(74) Representative: Kancelaria Eupatent.pl Sp. z.o.o

(57) **Abstract**

A device for providing a menu with multiple instantiations for a multi-stream display, the device (220) comprising: a data receiving block (620) for receiving a plurality of audio/video streams; an audio/video block (670) for decoding the plurality of the received audio/video streams and sending the decoded frames of the video streams to a display device, wherein the frames of the video streams are time-interleaved for sequential display of frames of consecutive video streams; and a controller (610) comprising shutter glasses control unit (613) for communicating with shutter glasses (411-414) of watchers (311-314) to transmit information comprising timing of frames of a particular video stream associated with that shutter glasses (411-414). The controller (610) further comprises: a multi-user Graphical User Interface (GUI) instantiation manager (611) configured to operate a plurality of instantiations of a GUI, wherein each GUI corresponds to a particular set of watcher devices (321-324), each set comprising the shutter glasses (411-414).

## Description

### TECHNICAL FIELD

The present invention relates to a graphical user interface with multiple instantiations for electronic appliances.

### BACKGROUND

Currently available video display technologies allow full-screen display of a plurality of video streams on a single TV display, monitor or even a cinema screen, to allow the plurality of users to watch different streams simultaneously.

For example, this can be achieved by time-interleaving the successive frames of the video streams. First, a first frame of stream "A" can be displayed, then a first frame of stream "B", then a first frame of stream "C", and next a second frame of stream "A", a second frame of stream "B" and so on. So-called shutter glasses can be used by individual users (watchers) to watch particular video streams, as known from the 3D video technology. The shutter glasses have lenses which change from transparent to opaque and vice versa. The process of changing the state of the lenses is controlled electronically and is relatively fast comparing to human perception. The glasses are synchronized with the display such that when the frames of the stream "A" are displayed, the shutter glasses "1" are transparent and the other glasses are opaque, and when the frames of the stream "B" are displayed, the shutter glasses "2" are transparent and the other glasses are opaque, and so on. If the video streams are monoscopic, both lenses for the left and right eye change their state simultaneously. As a result, the watcher wearing the glasses "1" observes only frames related to stream "A" while the watcher wearing the glasses "2" observes only the frames of stream "B" and so on. Therefore, the video streams can be selected independently by different watchers for simultaneous watching on the same display.

The aforementioned method may be also applied for simultaneous watching of 3D video streams, as well as simultaneous watching of 3D and 2D video streams. The technology is limited mainly by the maximum amount of frames that can be displayed per a unit of time by the displaying device.

The video streams may be provided from one source or a plurality of different sources, such as a computer, a game console, a television set-top box, a DVD player, a smartphone etc. For example, a game console may provide two distinct video streams, each for a different player. Alternatively, a single display can be used by two watchers, wherein one watcher intends to watch a video stream from a game console and the second watcher intends to watch a television program from a set-top box.

Each watcher should have an individual headset to receive a sound track corresponding to the watched video stream. In another scenario of use, different watchers can watch the same video stream, but with different sound tracks (for example different languages).

There is a need to provide, for each watcher of the multi-stream display, a way to control the display of the stream watched by the watcher, for example by providing a menu that is at least partially independent for each watcher, such that each watcher may individually control the display.

The aim is therefore to provide a system and a method for displaying and operating a menu having multiple instantiations for controlling a multi-stream display by each watcher of the display in at least partially independent manner.

### SUMMARY

There is disclosed a device for providing a menu with multiple instantiations for a multi-stream display, the device comprising: a data receiving block for receiving a plurality of audio/video streams; an audio/video block for decoding the plurality of the received audio/video streams and sending the decoded frames of the video streams to a display device, wherein the frames of the video streams are time-interleaved for sequential display of frames of consecutive video streams; a controller comprising shutter glasses control unit for communicating with shutter glasses of watchers to transmit information comprising timing of frames of a particular video stream associated with that shutter glasses. The controller further comprises: a multi-user Graphical User Interface instantiation manager configured to operate a plurality of instantiations of a GUI, wherein each GUI corresponds to a particular set of watcher devices, each set comprising the shutter glasses.

The controller may further comprise an image frame generator for generating image frames corresponding to the particular instantiation of the multi-user GUI in a frame sequence for the video corresponding to that instantiation.

The controller may further comprise an audio track control unit for isolating audio tracks, from the received audio/video stream, appropriate for a particular instantiation of the multi-user GUI and sending them to the headphones of the set of watcher devices corresponding to the particular instantiation of the multi-user GUI.

The controller may further comprise a virtual Remote Control Unit control unit responsible for communicating with a virtual RCU of the set of watcher devices corresponding to the particular instantiation of the multi-user GUI.

The controller may further comprise a conflict manager configured to resolve conflicts between access of watcher devices depending on priority set for individual RCUs.

There is also disclosed a system comprising: a multi-stream display device; a plurality of sets of watcher devices; and a device as described above.

At least one set of watcher devices may comprise shutter glasses, a remote control unit and headphones.

There is also disclosed a method for providing a menu with multiple instantiations for a multi-stream display, the method comprising the steps of: detecting a plurality of sets of watcher devices; executing an individual instantiation of a Graphical User Interface for each of the plurality of sets of watcher devices; and receiving and decoding a plurality of audio/video streams and sending the decoded frames of the video streams to a display device, wherein the frames of the video streams are time-interleaved for sequential display of frames of consecutive video streams.

There is also disclosed a non-transitory computer readable storage medium comprising instructions that, when executed by a computer, enable method for providing a menu with multiple instantiations in accordance with the method as described above.

### BRIEF DESCRIPTION OF DRAWINGS

Further details and features of the present invention, its nature and various advantages will become more apparent from the following detailed description of the preferred embodiments shown in drawings, in which:
Fig. 1 shows an overview of a content distribution system;
Fig. 2 shows an overview of a content distribution system at a user premises;
Fig. 3 shows a fragment of the system from Fig. 2;
Fig. 4A shows examples of user devices;
Fig. 4B shows details of user glasses;
Fig. 5A shows a typical setup of a mobile device;
Fig. 5B shows a sensors unit of a mobile device;
Fig. 5C shows a connectivity module of a mobile device;
Fig. 6A shows a configuration of a decoder;
Fig. 6B shows resources of a data receiving block in the decoder;
Fig. 6C shows data stored in a memory of the decoder;
Fig. 7A shows an example of a configuration of a multi-user GUI;
Fig. 7B shows the multi-user GUI configuration of Fig. 7A with different types of displayed content;
Fig. 7C shows another configuration of the multi-user GUI;
Fig. 8 shows a flowchart of a method for initializing multiple instantiations of a multi-user GUI;
Figs. 9A-9F show detailed steps of the method of Fig. 8.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DETAILED DESCRIPTION

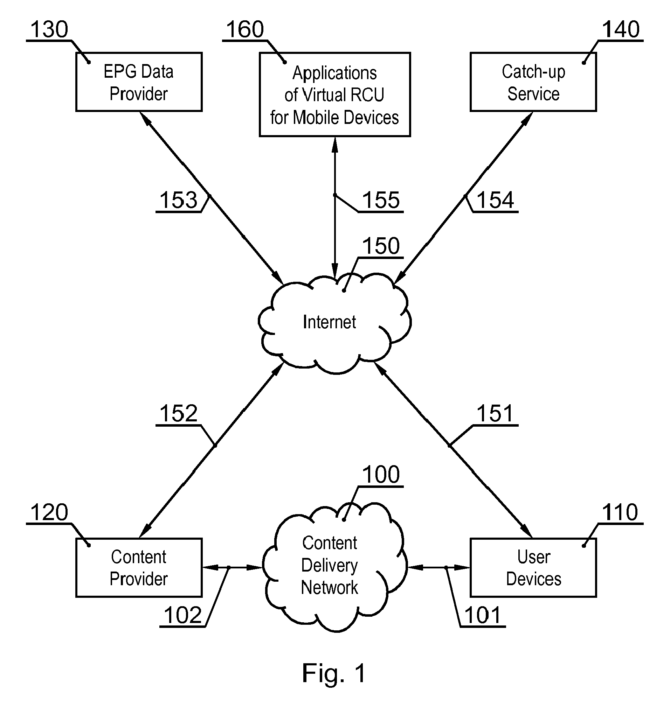

Fig. 1 presents an overview of a content distribution system. Content can be provided to user devices 110 by various distributors from various sources. A content provider 120 may provide linear TV content, such as time-and-channel based television, live broadcasts etc, to a content delivery network 100, which may be broadcast, multicast or unicast. The user is connected with the content delivery network via a transmission channel 101, such as a Cable, Satellite, Terrestrial, IP multicast network or other type of network. Additional services are available to the user devices 110 linked via a transmission channel 151 with the Internet 150 (or through the content provider 120 connected via a transmission channel 152 with the Internet and via a transmission channel 102 with the content delivery network 110) and include at least some of the following.

A catch-up service 140 is configured to provide, via a transmission channel 154, retransmission the content that has been already broadcast as linear TV, in order to allow the users to watch it a few hours or even days later.

An Electronic Program Guide (EPG) data provider 130 is configured to provide, via a transmission channel 153, additional data about content available from various sources, including the content available from the content delivery network 100 and the other content providers 140, 160.

Electronic Program Guide (EPG) data provider 130 is configured to provide, via a transmission channel 153, additional data about content available from various sources, including the content available from the content delivery network 100 and the other content providers 140.

The content items for which the program guide is displayed may include live broadcast events and/or other content items, such as catch-up content, video-on-demand content, etc.

The transmission channels 151-154 may be of any known type, such as wired or wireless, using transmission technologies suitable to carry data of a particular service.

An application server 160 is configured to provide, via a transmission channel 155, applications of virtual RCU for mobile devices allowing them to emulate a regular RCU unit.

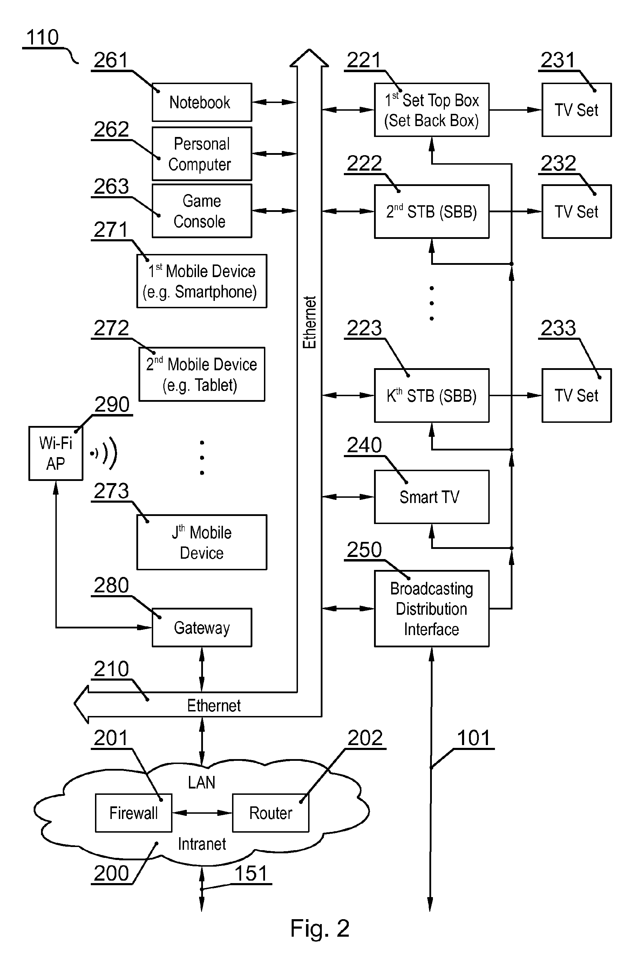

Fig. 2 presents an overview of a content distribution system at a user premises, such as at home or at an office. The user devices are connected to an Intranet - a local area network (LAN) 200 via an interface such as Ethernet (IP) 210, which is connected with the Internet 150 via the transmission channel 151. The LAN 200 preferably includes a firewall 201 and a router 202 configured to secure and coordinate data transmission. A gateway 280 may provide access to the Intranet 200 via a wireless access point (AP) 290, such as in Wi-Fi technology. A plurality of devices may be used in the user premises. Some of the devices may be mobile devices, such as a smartphone 271, a tablet 272 or another type of device 273. Other devices may be mobile or stationary and include devices such as a notebook computer 261, a personal computer 262, a game console 263, a Set Top Box (STB) or a Set Back Box (SBB) 221, 222, 223 connected to a television set 231, 232, 233, or a smart television set 240. A broadcasting distribution interface 250 may receive content from the content delivery network 100 via the transmission channel 101 and/or from the other devices 221-223, 240, 261-263, 271-273, 280 via direct links or the Ethernet interface 210 and distribute it to the other devices via direct links or via the Ethernet interface 210.

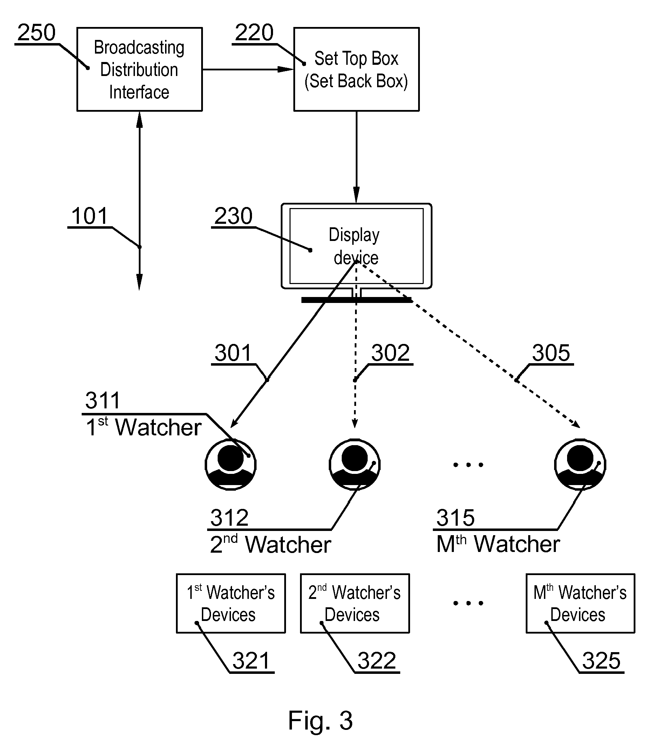

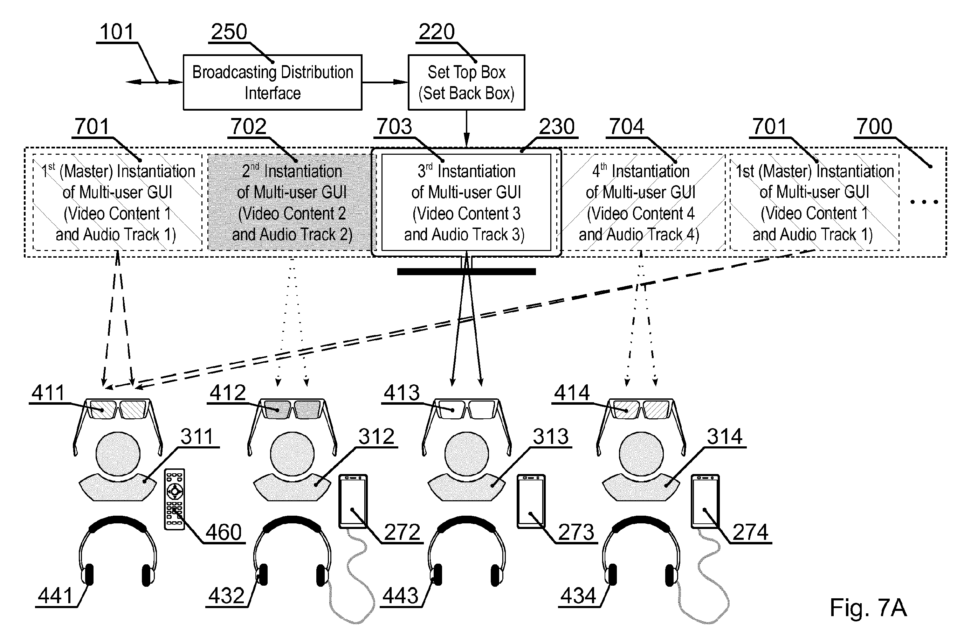

Fig. 3 shows a fragment of the system from Fig. 2. A video decoder device 220 (such as a Set Top Box or a Set Back Box) receives data from the broadcasting distribution interface 250, decodes it and displays on a display device 230 (such as a TV set). The decoder 220 is configured to output a plurality of video streams such that they can be watched simultaneously by the watchers, as known in the art and e.g. explained in the background section. The decoder 220 is configured to provide a menu with multiple instantiations, as will be explained in details below. The menu has a graphical user interface (GUI) with several simultaneous instantiations associated with each watcher 311-314 associated to corresponding shutter glasses. Each watcher may be associated with several devices 321-324: glasses (with or without headphones), a Remote Control Unit (RCU) (regular or emulated by software application run on a mobile device) and headphones (autonomic wired or wireless, or wired connected to the mobile device). Separate instantiation of the multi-user GUI is operated for each watcher 311-314, therefore the watchers may navigate through different modules of the menu at the same time while watching the same Display device. The shutter glasses are synchronized so that when contents 301 for the watcher 311 are displayed, then that glasses 411 (shown in Fig. 7A) are transparent while the glasses of other watchers 312-314 are opaque. The same applies in equivalent manner to contents 302-304 for the other watchers 312-314.

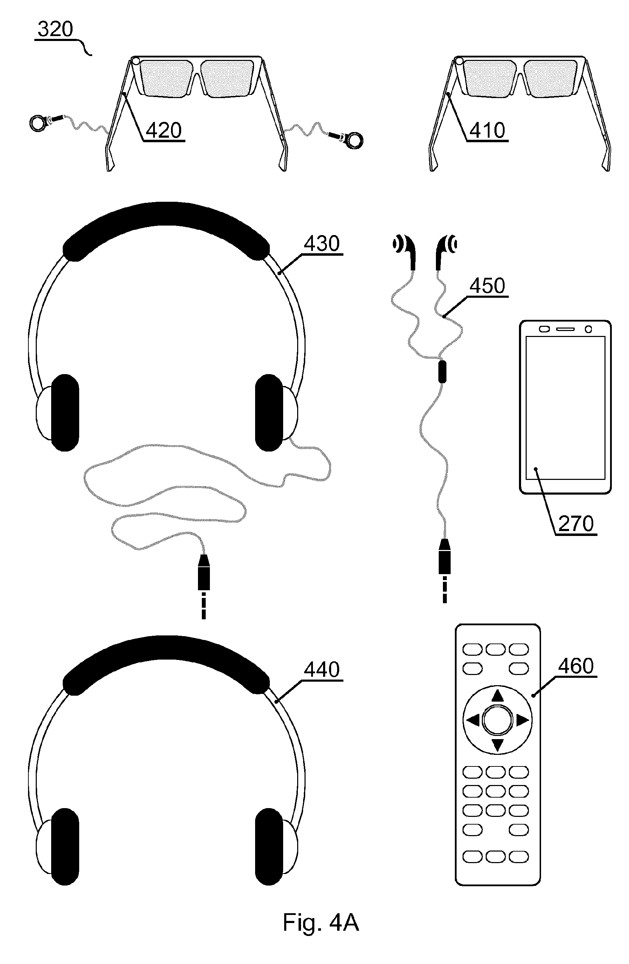

Fig. 4A shows examples of user devices. The watcher may use different user devices for controlling the GUI menu and receiving the audio/video streams. For example, a standard RCU 460, a mobile device 270, shutter glasses with earphones 420 or shutter glasses without earphones 410, wired or wireless headphones 430, 440, 450 can be used.

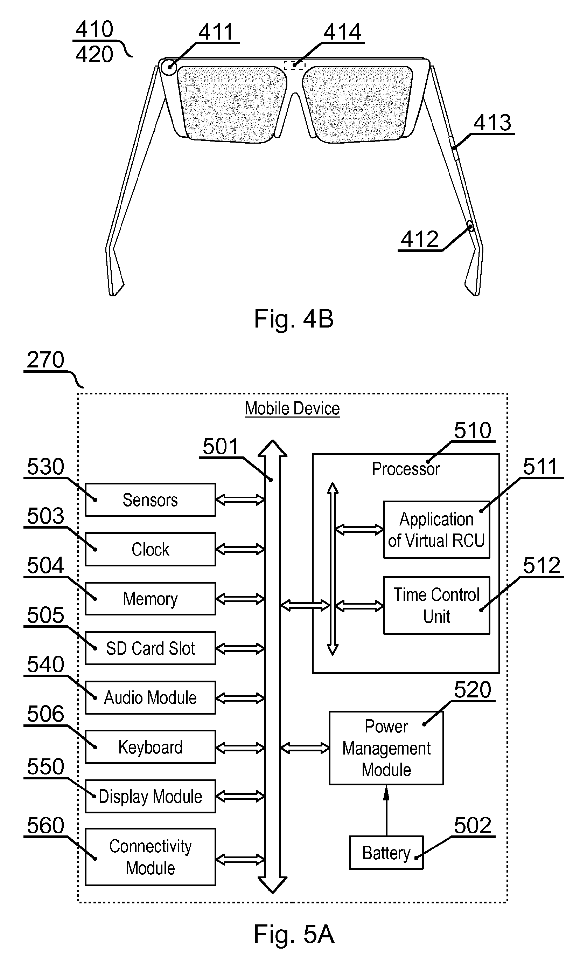

Fig. 4B shows a detailed example of shutter glasses 410, 420. The shutter glasses 410, 420 can be equipped with a mechanical micro switch or a touch sensor 413 for activating and deactivating the glasses, an IR transmitter 412 and an IR receiver 411 for on-head detection (i.e. detecting whether the user wears the glasses) and a communication system 414 for bidirectional communication with the decoder or the display device. The head of the user is detected when the signal path between the IR transmitter 412 and the IR receiver 411 is obstructed. After taking off the glasses, the IR receiver 411 receives a signal from the IR transmitter 412 and the glasses can be automatically deactivated. The bidirectional communication system 414 receives synchronization signals, which control the state of the lenses (transparent or opaque).

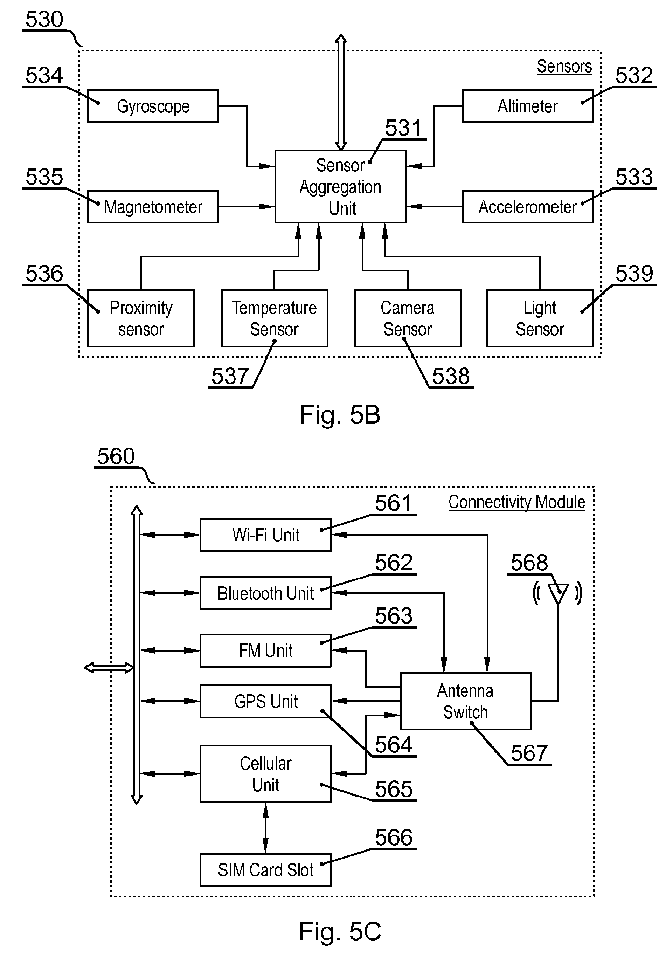

Fig. 5A presents a typical setup of a mobile device 270. The device 270 comprises a connectivity module 560 responsible for wirelessly receiving and/or transmitting data. A memory 504 is used for storing data (including data associated with the cooperating user devices) as well as software executed by the processor 510 of the mobile device (for example, the virtual RCU 511 application). A clock module 503 is configured to provide clock reference for other modules of the system (cooperating with a time control module 512 of the processor). A sensors module 530 comprises at least one sensor as will be presented with reference to Fig. 5B.

Other, typical, but optional modules of the mobile device are a display module 550 configured to display the GUI to a user, a keyboard 506 operating as an input interface for the mobile device, an audio module 540 configured to generate audible signals and/or an external memory slot such as an SD card slot 505 configured to receive and operate an external memory unit.

A bidirectional data bus 501 may be employed to enable communication between the modules and the processor 510.

The mobile device may also comprise a power management module 520 cooperating with a battery 502.

Fig. 5B presents a sensors unit 530 of the mobile device. The management of sensors may be controlled by a sensors aggregation unit 531, which serves as a bridge between each of the set of sensors and a client requesting data from respective sensors. The sensors may be any one of or any subgroup of the following sensors: a proximity sensor 536, a temperature sensor 537, a light intensity sensor 539, an accelerometer 533, an altimeter 532, a gyroscope 534, a magnetometer 535, and a camera sensor 538. The aforementioned sensors operate according to principles known in the prior art, in particular in the field of smartphones.

Fig. 5C presents the connectivity module 560 of the mobile device. The communication means may be any one of or any subgroup of the following: Wi-Fi 561, Bluetooth 562, FM radio 563, GPS 564, cellular telephony communication unit 565 (such as GSM, 3G, 4G and similar) communicating with a SIM card slot 566, or similar. The different communication means may be managed by an antenna switch 567 connected to an antenna module 568 that may comprise one or more types of antennas.

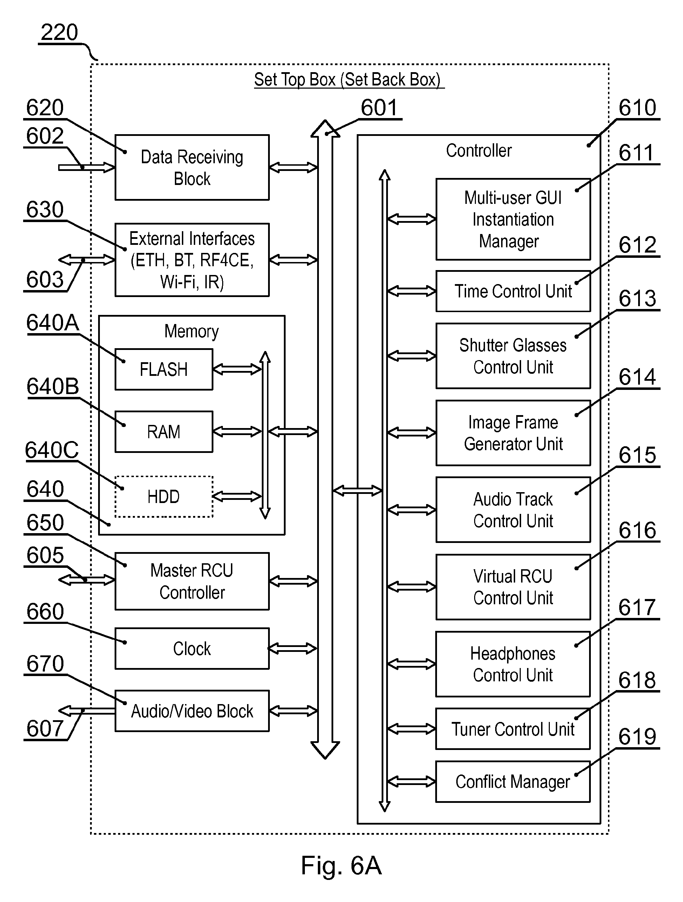

Fig. 6A shows a structure of the decoder 220. The decoder 220 (a Set Top Box (STB) or a Set Back Box (SBB)) is capable of executing multiple instantiations of the GUI.

A data receiving/transmitting block 620 is configured to communicate, via at least one transmission channel 602, with the Ethernet (IP) network 210 or the wireless network, in order to receive content, applications and/or content data. The decoder may further comprise external interfaces 630 (Ethernet, Bluetooth, Zigbee RF4CE, Wi-Fi, InfraRed) to communicate, via at least one communication channel 603, with other devices or accessories.

A clock module 660 is configured to provide timing data necessary e.g. to synchronize the modules in the decoder.

A master RCU controller 650 is used for communicating 605 with user's remote control units (a standard RCU or the RCU emulated on the mobile device). \

An audio/video block 670 is used for decoding the video streams and sending the decoded frames of the multiple video streams to the display device for displaying the streams to the watcher, wherein the frames of the video streams are time-interleaved for sequential display of frames of consecutive streams.

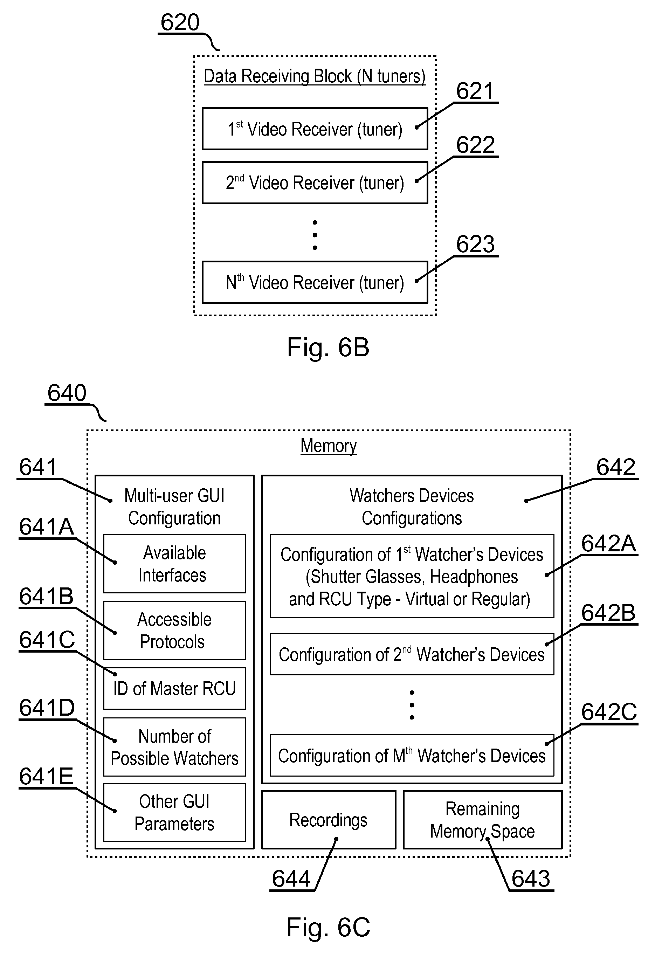

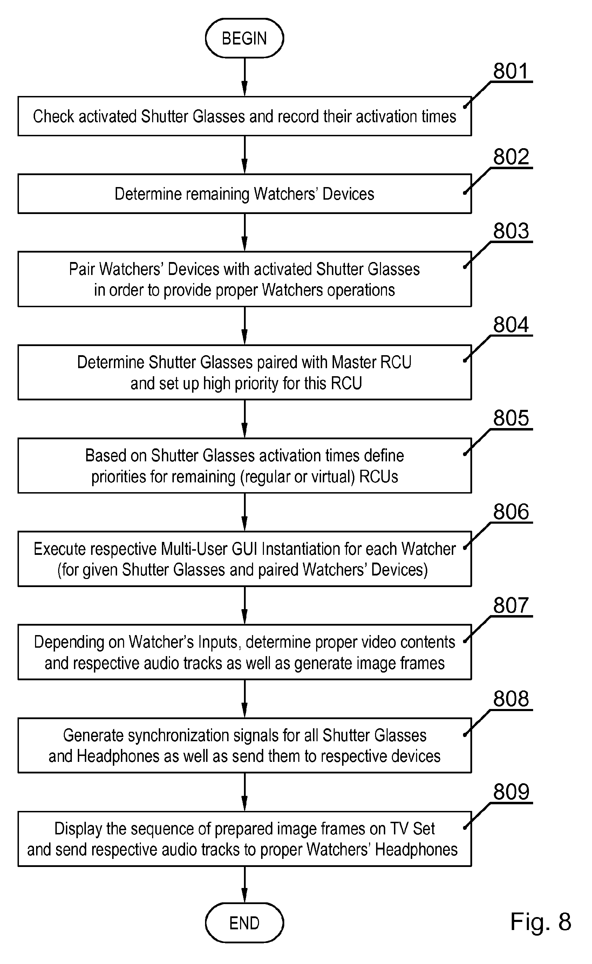

A controller 610 comprises a plurality of units configured to provide the functionality of the system as described herein, including at least one of:
- a multi-user GUI instantiation manager 611 responsible for operating the plurality of instantiations of the aforementioned multi-user GUI for each watcher device and for controlling the remaining processes (612-619) according to a method shown in Fig. 8;
- a time control unit 612 responsible for generating synchronization signals for synchronization with glasses and headphones (or with mobile devices to which the headphones are connected);
- a shutter glasses control unit 613 responsible for monitoring, controlling and communicating with the watcher's shutter glasses to transmit information comprising timing of frames of a particular video stream associated with that shutter glasses;
- an image frame generator 614 responsible for generating image frames corresponding to given instantiation of the multi-user GUI in a frame sequence for the video displayed on the Display device;
- an audio track control unit 615 for isolating audio tracks, from the received audio/video stream, appropriate for the given instantiation of the multi-user GUI and sending them to the corresponding watcher's headphones according to the synchronization signals;
- a virtual RCU control unit 616 responsible for communication and controlling of the virtual remote control units;
- a headphones control unit 617 responsible for communication and controlling of the headphones;
- a tuner control unit 618 for monitoring actual utilization of tuners available in the data receiving block 620 in the decoder (Fig. 6B);
- a conflict manager 619 responsible for detecting potential conflicts resulting from utilizing the resources of tuners and from all possible instantiations of the multi-user GUI operating at the same time.

It is possible that the maximum amount of possible instantiations of the multi-user GUI (being in fact the maximum amount of possible watchers) is smaller than the amount of activated, actually detected by the decoder, glasses. In such situation the conflict manager 619, according to the priorities set for individual RCUs with respect to their activation order, may offer to the watcher using the glasses whose number exceed the number of maximum possible instantiations to watch the contents chosen by the other watcher utilizing glasses with higher priority rank.

The controller 610 operates utilizing memory blocks 640, including RAM 640A and Flash 640B blocks, and optionally a HDD 640C.

The modules of the decoder 220 communicate with each other over a bidirectional data bus 601.

Fig. 6B shows resources of a data receiving block 620 of the decoder 220. The data receiving block 620 may comprise several front-ends (for example, 2, 4, 8 or 16 front-ends) that allow to receive video streams from several video receivers (tuners) 621-623.

Fig. 6C shows data stored in the memory 640 of the decoder. Data is stored in containers, such as tables or other data types.

A multi-user GUI configuration 641 data set comprises information concerning available interfaces 641A, accessible protocols 641 B, ID of Master RCU 641C, a number of possible watchers 641 D and other GUI parameters 641 E (such as user-specific colour schemes (or GUI skins), selected EPG type, power saving modes, parental rating etc.). A watchers' devices configurations 642 data set comprises information concerning configuration of the first watcher's devices 642A, such as shutter glasses, headphones and RCU type (virtual or regular), as well as configuration of the second and consecutive watcher's devices 642B, 642C.

A recordings 644 data set comprises information on recordings stored in the mass storage, such as the HDD.

The remaining memory space 643 can be used for storing other data, depending on system needs.

Fig. 7A shows an example of a configuration of a multi-user GUI and the sequences of the displayed images frames. In the presented example, the multi-user GUI has four instantiations 701-704 which are dedicated to four watchers 311-314. Each watcher possesses dedicated shutter glasses, wherein the first watcher 311 additionally uses a standard RCU 460 and wireless headphones 441, the second watcher uses a mobile device 272 with headphones 432 connected to it, the third watcher uses a mobile device 273 and wireless headphones 443 and the fourth watcher uses a mobile device 274 with headphones 434 connected to it. The first instantiation 701 presents video stream 1 and audio track 1 dedicated to the first watcher 411. The first frame of the displaying sequence corresponds to the first instantiation 701. While the first frame is displayed, the lenses of the shutter glasses 411 of the first watcher are transparent (in other words: active, enabled) while the lenses of the glasses of the remaining watchers are opaque (in other words: inactive, disabled). Next, the second frame is displayed which corresponds to the second instantiation 702 (presenting video stream 2 and audio track 2) dedicated to the second watcher 312. When the second frame is displayed the lenses of the second watcher's glasses 412 are transparent while lenses of the glasses of the remaining watchers are opaque. Equivalent principles apply to the third and fourth instantiation.

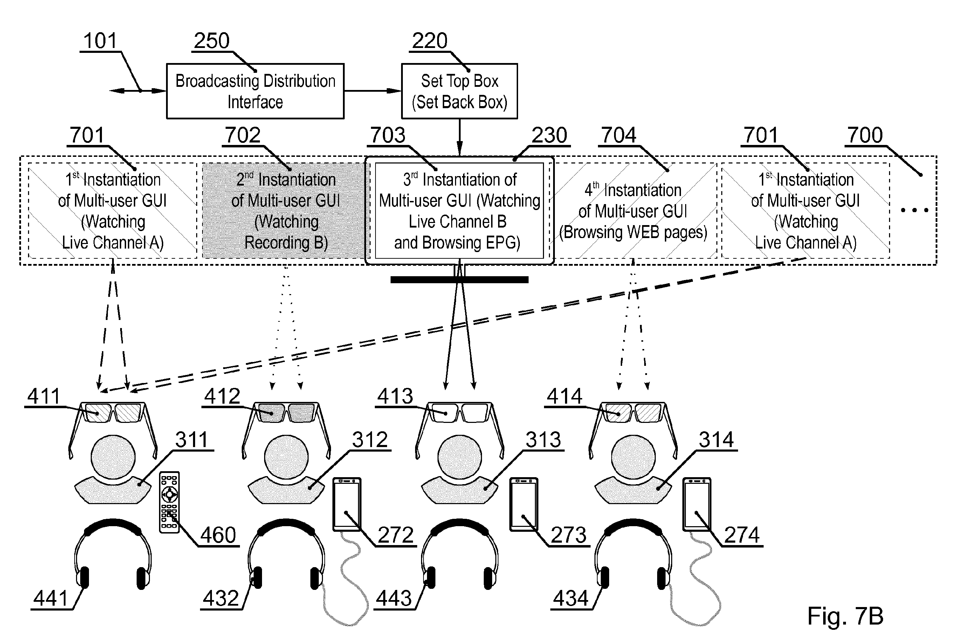

Fig. 7B shows the multi-user GUI configuration of Fig. 7A with different types of displayed content, wherein:
- the first watcher 311, using the first instantiation 701, watches a live television channel A;
- the second watcher 312, using the second instantiation 702, watches a recorded Recording B;
- the third watcher 313, using the third instantiation 703, browses an EPG while watching television channel B;
- the fourth watcher 314, using the fourth instantiation 704, browses WEB pages.

Therefore each instantiation 701-704 may be related to the different content dedicated for each watcher 311-314.

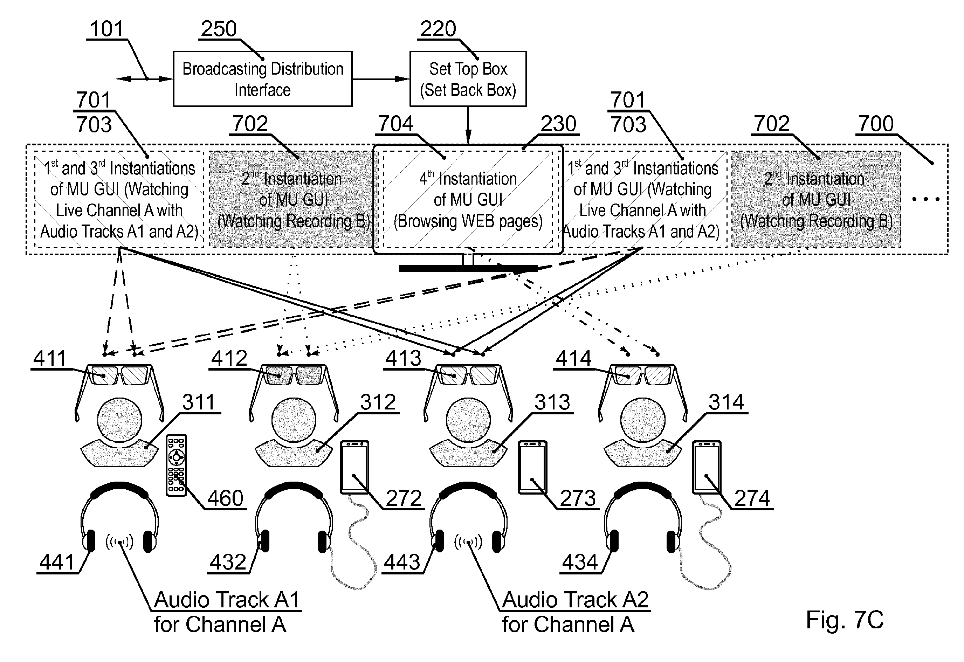

Fig. 7C shows another configuration of the multi-user GUI, with four instantiations, wherein the watchers 311 and 313 are watching the same video streams (common for the first instantiation 701 and the third instantiation 703) but with different audio tracks A1 and A2. The other watchers 312 and 314 watch other instantiations 702, 704 having different video and audio contents. Reducing the amount of differing video streams (reduction of video frames) from four down to three allows to run another instantiation of the multi-user GUI having different video and audio content. It also reduces the utilization of the system resources.

Fig. 8 shows a flowchart of the consecutive steps of a method for initialization of multiple instantiations of a multi-user GUI on the decoder. In the first step 801, the system checks the activated shutter glasses and records their activation times which later define their priority values. Next in step 802, the remaining watchers' devices are determined. In step 803, the watchers' devices are paired with the activated shutter glasses in order to provide corresponding watchers' operations. In step 804 the shutter glasses paired with a master RCU are determined and a high priority is set up for this RCU. In step 805, on the basis of the shutter glasses activation times, the priorities for the remaining (regular or virtual) RCUs are defined. In step 806, the respective multi-user GUI instantiations for each watcher (for given shutter glasses and paired watchers' devices) are executed. In step 807, depending on the watcher's inputs, corresponding video streams and audio tracks are determined, and image frames are generated, including an overlay of a GUI instantiation associated with the particular set of watcher devices. In step 808, synchronization signals for all shutter glasses and headphones are generated and sent to the respective devices. In step 809, the prepared sequence of the image frames are displayed on the display device and the respective audio tracks are sent to corresponding watchers' headphones.

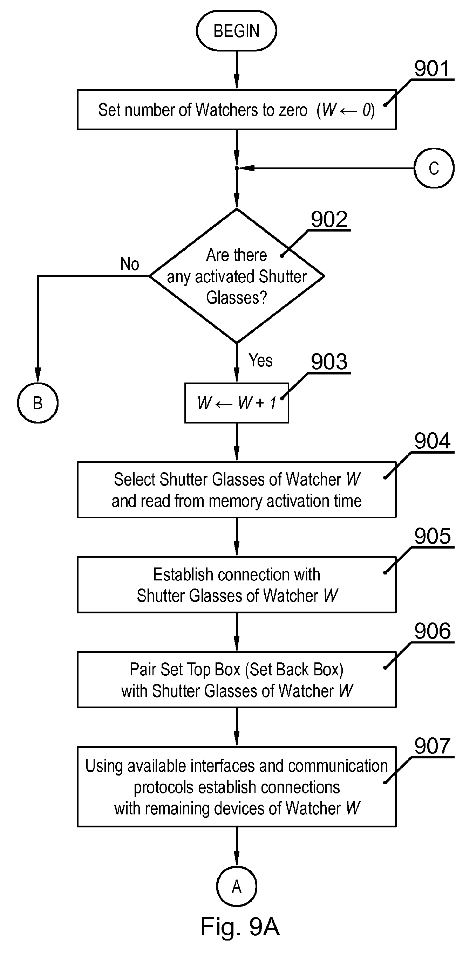

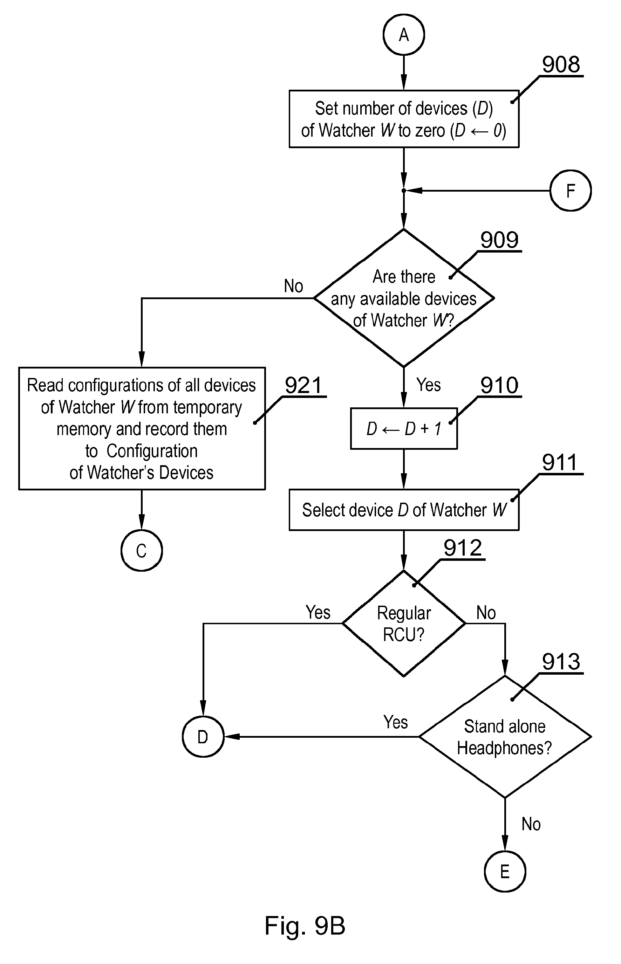

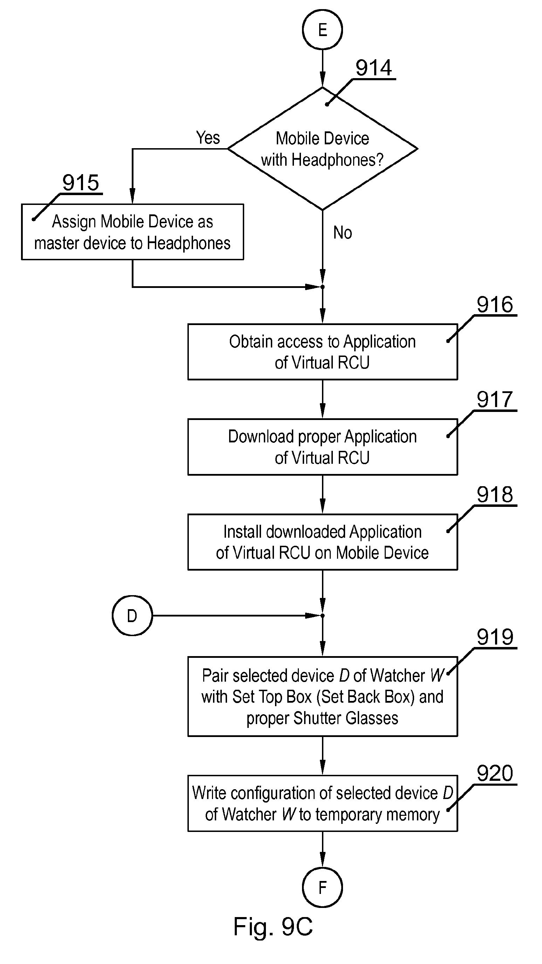

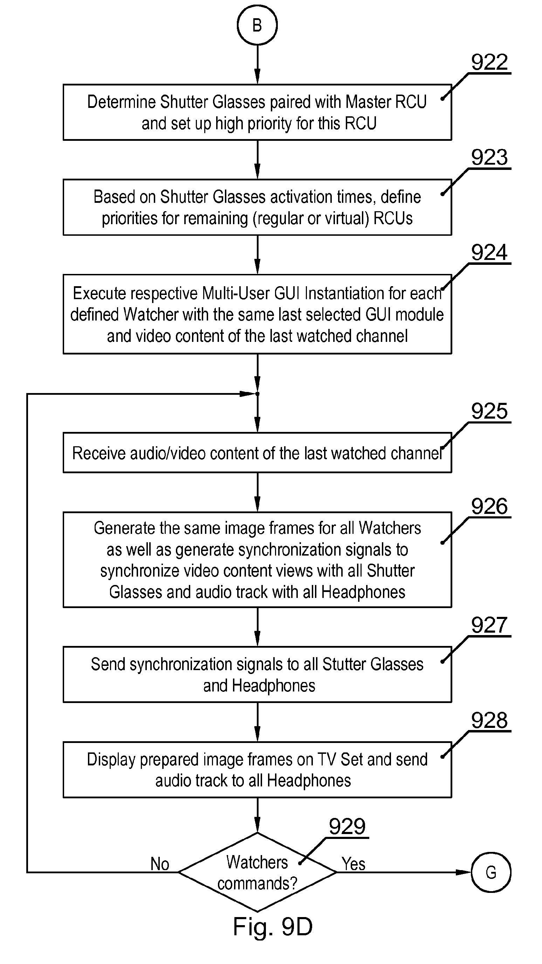

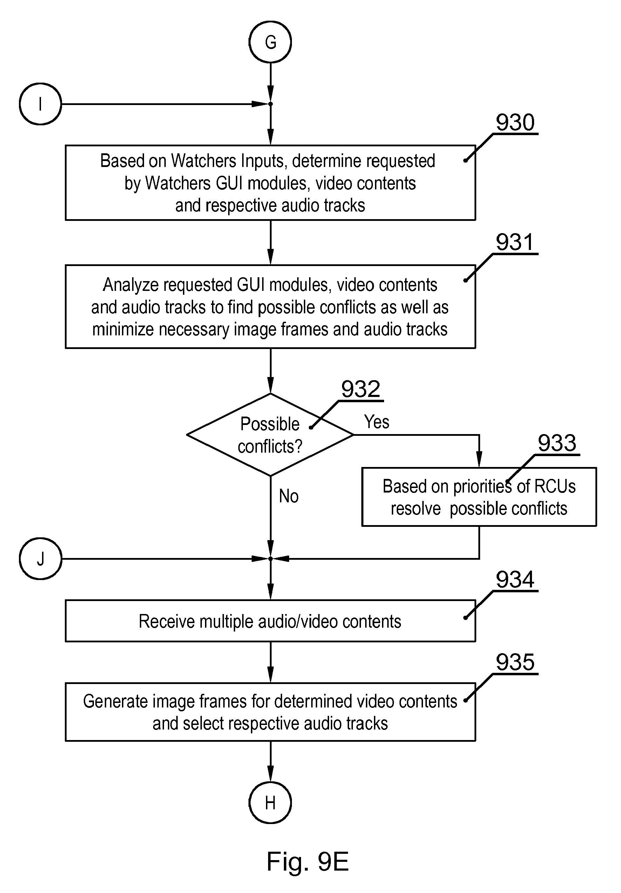

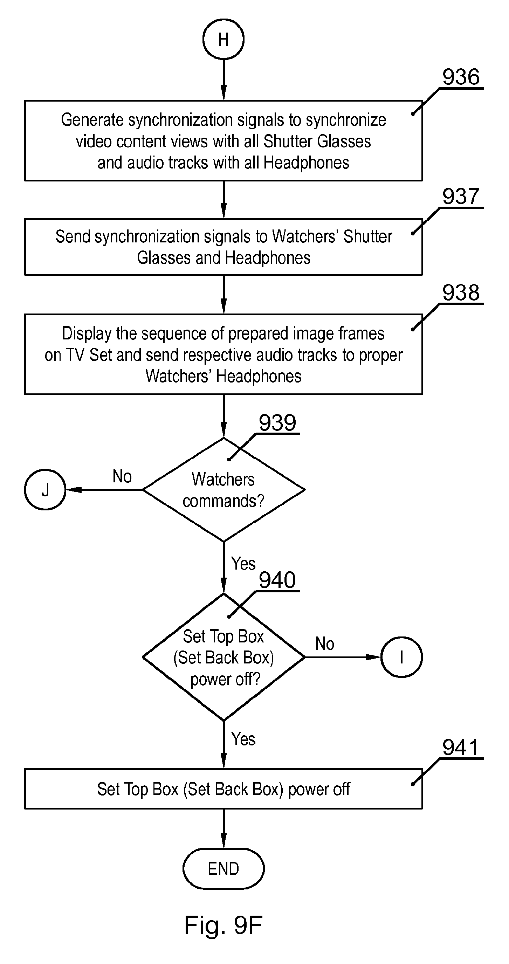

Figs. 9A-9F shows a flow chart representing detailed steps of the method of Fig. 8. The method begins in step 901, wherein the number of watchers W is set to zero. Next in step 902 the system checks if there are any activated shutter glasses. If so, then in step 903 the number of watchers W is increased by one. Otherwise, the procedure moves to step 922. Next, the procedure continues to step 904 wherein the shutter glasses of the watcher W are selected and the activation time is read from the memory. In step 905, a connection is established with the shutter glasses of the watcher W. In step 906 the decoder is paired with the shutter glasses of the watcher W. Using the available interfaces and communication protocols, connections with the remaining devices of watcher W are established in step 907. In step 908 the number of devices D of the watcher W is set to zero. In step 909 the system checks if there are any available devices of the watcher W. If there are no more available devices, then in step 921 the configuration of all devices of the watcher W is read from the temporary memory and recorded to the configuration of the watcher's devices and next the procedure moves to step 902. If there are available devices, then in step 910 the number of the available devices of the watcher W is increased by one. In step 911 the device D of the watcher W is selected. In step 912 it is checked if the watcher's RCU is a regular RCU, if so the procedure moves to step 919. If the RCU is not a regular one, then in step 913 it is checked if the watcher's device is standalone headphones. If the device is a standalone headphones, the procedure moves to step 919, if not then in step 914 it is checked if the mobile device comprises headphones. If so, then in step 915 the mobile device is assigned as a master device to the headphones and if not, the procedure moves directly to step 916 where access to the application of virtual RCU is obtained. In step 917 the corresponding application of the virtual RCU is downloaded and further in step 918 the downloaded application of the virtual RCU is installed on the mobile device. In step 919 the selected device D of the watcher W is paired with the decoder and corresponding shutter glasses. In step 920 the configuration of the selected device D of the watcher W is stored in the temporary memory. Next the procedure loops back to step 909.

In step 922, the shutter glasses that are paired with the master RCU are determined and a high priority is set up for this RCU. Next, in step 923, on the basis of the shutter glasses activation times, the priorities for the remaining (regular or virtual) RCUs are defined. In step 924, the respective multi-user GUI instantiations are executed for each defined watcher with the same last selected GUI module and video stream of the last watched channel. In step 925, the audio/video stream of the last watched channel is received from the broadcasting distribution interface 250. In step 926 there are generated the same image frames for all watchers as well as synchronization signals to synchronize video stream views with all shutter glasses and the audio track with all headphones. In step 927, the synchronization signals to all shutter glasses and headphones are sent. Next in step 928, the generated image frames are displayed on the display device and an audio track is sent to all headphones. In step 929 the system checks if there are any watcher commands. If there are no commands, then the procedure returns to step 925. If there are any commands, the procedure continues to step 930, wherein on the basis of watchers inputs (requested by the watchers), the GUI modules, the video streams and corresponding audio tracks are determined. In step 931, the requested GUI modules, the video streams and audio tracks are analysed in order to find possible conflicts as well as minimize necessary image frames and audio tracks. In step 932, the system checks if there are any possible conflicts. If there are any conflicts, the system (on the basis of priorities of the RCUs) resolves the conflicts in step 933 and next moves to step 934. In step 934, multiple audio/video streams are received. Next, in step 935, the image frames for determined video streams are generated and the respective audio tracks are selected. In step 936 there are generated synchronization signals to synchronize video stream views with all shutter glasses and audio tracks with all headphones. In step 937 the synchronization signals to the watchers' shutter glasses and headphones are sent. In step 938 the sequence of the prepared image frames is displayed on the display device and corresponding audio tracks are sent to corresponding watchers' headphones. In step 939 the system checks if there are any watchers' commands and if not, the procedure loops back to step 934. Otherwise, in step 940 the system checks if the watcher's command was to turn off the decoder. If there was no command for turning of the decoder, the procedure returns to step 930. If the watcher sent a command to turn off the decoder, then in step 941 the decoder is turned off.

It can be easily recognized, by one skilled in the art, that the aforementioned method for providing a menu with multiple instantiations for a multi-stream display may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A device for providing a menu with multiple instantiations for a multi-stream display, the device (220) comprising:
- a data receiving block (620) for receiving a plurality of audio/video streams;
- an audio/video block (670) for decoding the plurality of the received audio/video streams and sending the decoded frames of the video streams to a display device, wherein the frames of the video streams are time-interleaved for sequential display of frames of consecutive video streams; and
- a controller (610) comprising shutter glasses control unit (613) for communicating with shutter glasses (411-414) of watchers (311-314) to transmit information comprising timing of frames of a particular video stream associated with that shutter glasses (411-414);
**characterized in that** the controller (610) further comprises:
- a multi-user Graphical User Interface (GUI) instantiation manager (611) configured to operate a plurality of instantiations of a GUI, wherein each GUI corresponds to a particular set of watcher devices (321-324), each set comprising the shutter glasses (411-414).

2. The device according to claim 1, wherein the controller (610) further comprises an image frame generator (614) for generating image frames corresponding to the particular instantiation of the multi-user GUI in a frame sequence for the video corresponding to that instantiation.

3. The device according to any of previous claims, wherein the controller (610) further comprises an audio track control unit (615) for isolating audio tracks, from the received audio/video stream, appropriate for a particular instantiation of the multi-user GUI and sending them to the headphones (441-444) of the set of watcher devices (321-324) corresponding to the particular instantiation of the multi-user GUI.

4. The device according to any of previous claims, wherein the controller (610) further comprises a virtual Remote Control Unit (RCU) control unit (616) responsible for communicating with a virtual RCU (272-274) of the set of watcher devices (321-324) corresponding to the particular instantiation of the multi-user GUI.

5. The device according to any of previous claims, wherein the controller (610) further comprises a conflict manager (619) configured to resolve conflicts between access of watcher devices (321-324) depending on priority set for individual RCUs (460, 272-274).

6. A system comprising:
- a multi-stream display device (230);
- a plurality of sets of watcher devices (321-324); and
- a device (220) according to any of claims 1-5.

7. The system according to claim 6, wherein at least one set of watcher devices (321-324) comprises shutter glasses (411-414), a remote control unit (460, 272-274) and headphones (441-444).

8. A method for providing a menu with multiple instantiations for a multi-stream display, the method comprising the steps of:
- detecting (801, 802) a plurality of sets of watcher devices (321-324);
- executing an individual instantiation of a Graphical User Interface (GUI) for each of the plurality of sets of watcher devices (321-324); and
- receiving and decoding a plurality of audio/video streams and sending the decoded frames of the video streams to a display device, wherein the frames of the video streams are time-interleaved for sequential display of frames of consecutive video streams.

9. A non-transitory computer readable storage medium comprising instructions that, when executed by a computer, enable method for providing a menu with multiple instantiations in accordance with the method according to claim 8.
